Europäisches Patentamt

European Patent Office

Office européen des brevets

(19)

(11) Publication number: **0 014 467**
**B1**

(12) **EUROPEAN PATENT SPECIFICATION**

(45) Date of publication of patent specification: **18.04.84**

(51) Int. Cl.³: **B 29 B 1/02, C 08 J 3/12**

(21) Application number: **80100605.7**

(22) Date of filing: **06.02.80**

(54) Improved process for melt cutting ethylene polymers.

(30) Priority: **06.02.79 US 10047**

(43) Date of publication of application:
**20.08.80 Bulletin 80/17**

(45) Publication of the grant of the patent:
**18.04.84 Bulletin 84/16**

(84) Designated Contracting States:
**BE CH DE FR GB IT NL**

(56) References cited:
**GB - A - 1 378 222**
**US - A - 3 245 934**
**US - A - 3 422 049**
**US - A - 3 432 483**
**US - A - 3 528 841**
**US - A - 3 892 834**
**US - A - 4 007 247**

(73) Proprietor: **E.I. DU PONT DE NEMOURS AND COMPANY**
**Legal Department 1007 Market Street**
**Wilmington Delaware 19898 (US)**

(72) Inventor: **Hale, Alan Donald**
**25 Canterbury**
**Orange, Texas 77630 (US)**
Inventor: **Murphy, Charles Vincent**
**10 Colony Blvd Apt. 522 Colony North Apts**
**Wilmington, Delaware 19802 (US)**

(74) Representative: **Abitz, Walter, Dr.-Ing. et al,**
**Abitz, Morf, Gritschneder P.O. Box 86 01 09**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 014 467

Improved process for melt cutting ethylene polymers

## BACKGROUND OF THE INVENTION
### Field of the Invention
This invention relates to melt cutting and more specifically it relates to an improved process for the melt cutting of ethylene polymers.

### Description of the Prior Art
This invention starts from a process for melt cutting ethylene polymers, which process comprises extruding molten thermoplastic polymer through one or more orifices into water and cutting the extruded strand as it undergoes solidification (see for example G.B.P. 1,065,036).

The use of surfactants is wide spread in many applications. For example, ethylene oxide and propylene oxide copolymer surfactants are disclosed in US—A—3,422,049, and US—A—3,432,483, as aiding the preparation of dispersions of polymers with particle sizes of below 10 microns to not greater than 25 microns and in US—A—4,007,247 for the preparation of fibrils, i.e., short fibers having diameters less than 25 microns and preferably less than 10 microns. All three of these patents disclose water dispersion processes for polymer particle size reduction using high temperatures and pressures as well as high speed agitation and surfactants.

US—A—3,528,841 deals with reducing the tackiness of polymer pellets by applying a small particle size (less than 10 microns) polyolefin powder dispersed in water on the surface of the soft, sticky polymer to reduce its tackiness. In the alternative, the polyolefin powder coating can also be applied to the polymer by tumbling or by airveying. The purpose of applying this coating is to facilitate getting the product through the drying and purge steps of the production process and to supply a free flowing product to the trade.

Chemical Abstracts digest 37:153195p, Vol. 87, 1977 p. 48, entitled "Agglomeration prevention during steam-stripping of solvents from rubber solutions" involves the use of a 1000—3000 molecular weight ethylene oxide/propylene oxide copolymer as a surfactant in a water/hydrocarbon solvent dispersion. Thus, a 20% solids butadiene rubber solution in hexane was steam-stripped in a 0.005 weight percent solution of the above surfactant in water. This mixture forms a dispersion (oil in water at about 5 to 6% solids) and establishes the particle size of the rubber crumbs (average diameter 3.7 mm). The surfactant's function is to make the two incompatible phases, namely, hexane and water into one compatible phase. Steam stripping is used to obtain a single liquid (water) phase, ending up with an 8% solids slurry. The process involves forming a particle size in dispersion form from a solution of the rubber in a hydrocarbon solvent.

US—A—3,245,934 is concerned with the standard emulsion or dispersion technology for reducing the particle size of a polymer. The patent describes a process for producing finely divided polyolefin powder which consists essentially of the steps of dispersing and disintegrating into fine particles by means of shearing action a preformed gel consisting of a polyolefin resin and a volatile nonpolar organic solvent (e.g. heptane) in an aqueous medium containing a hydrophilic surfactant. The solvent is leached from the polyolefin particles, said particles remaining suspended in the agitated surfactant containing aqueous medium as the heptane solvent is evaporated. Upon completion of the evaporation step, the agitator is stopped. The solvent free polyolefin separates, distinctly forming an upper layer and is easily separated from the aqueous medium by filtration. The agglomeration temperature of the polyolefin is not increased by the addition of surfactants in this process.

The problem underlying the present invention is to find means which permit of an increase in the melt cutting capacity and productivity when melt cutting ethylene polymers.

## SUMMARY OF THE INVENTION
According to the present invention there is provided a process for melt cutting ethylene polymers, which process comprises extruding the molten thermoplastic polymer through one or more orifices into water and cutting the extruded strand as it undergoes solidification, characterised in adding to the water from about 1 to about 1000 ppm by weight of at least one surfactant selected from the group consisting of non-ionic and anionic surfactants that will increase by at least 10°C the agglomeration temperature of an ethylene polymer that has an agglomeration temperature of from about 50°C. to about 60°C., said surfactant having a hydrophilic/lipophilic balance (HLB) range of from about 10 to about 45.

### Detailed Description of the Invention
Surprisingly it was found that the addition of small quantities of a non-ionic surfactant to the melt cutter water significantly increased the agglomeration temperature of soft ethylene/vinyl acetate copolymers. In the context of the present invention, the term "agglomeration temperature" means the agglomeration temperature of extruded, hot, cut pellets in water. Agglomeration temperature is determined by the process described below under "Laboratory Testing Procedure". This increase in the agglomeration temperature results in an increase in melt cutting capacity and productivity.

2

Surfactants that are contemplated for use by the present invention are non-ionic and anionic surfactants that will increase by at least 10°C the agglomeration temperature of an ethylene polymer that has an agglomeration temperature of from about 50°C to about 60°C. Suitable surfactants have a hydrophilic/lipophilic balance (HLB) range of from about 10 to about 45.

Non-ionic surfactants are preferred and the preferred class of non-ionic surfactants are homo- and copolymers of olefin oxides wherein the olefin moiety contains up to 3 carbon atoms, such as ethylene and propylene oxide homo- and copolymers. The preferred (HLB) range is from about 20 to about 35.

A high molecular weight "Pluronic"* polyol, an $\alpha$-hydro-omega-hydroxy-poly(oxyethylene) poly(oxypropylene) poly(oxyethylene) block copolymer with an HLB range of about 10 to about 35 is the most preferred surfactant. Other non-ionic surfactants, however, such as oxyethylated straight chain alcohols, octyl phenoxy polyethoxy ethanol, ethylene oxide polymers and a reverse "Pluronic" 25R-8 [poly(oxypropylene)-poly(oxyethylene)-poly(oxypropylene) block copolymer] also significantly raised the agglomeration temperature of ethylene polymers in water.

At essentially equivalent HLB values the higher molecular weight polymers appear to be most effective.

The range of concentration for the melt cutter additive surfactant of the present invention is from about 1 to about 1000 parts per million (ppm) based upon the weight of the melt cutter water. The preferred range for the more effective surfactants is from about 1 to about 100 ppm.

Although the increased agglomeration temperature obtained by the process of the present invention was discussed in terms of ethylene/vinyl acetate (EVA) copolymers it is to be understood that the present invention applies to other soft ethylene polymers as well where tackiness and agglomeration are of concern.

It is very important in the manufacture of polymers used in adhesives that the concentration of additives used in processing these polymers be as low as possible so as not to result in an adverse effect on critical adhesive properties. As illustrated below in the examples, surfactants of the present invention show no adverse affect on adhesion in the critical adhesion to aluminum test at concentrations of 20 ppm, as well as even up to 2000 ppm in some instances.

Illustrative examples of commercially available surfactants are "Pluronic" F-98, "Pluronic F-108, "Plurafac"* A-38, "Pluronic" F-38, "Pluronic" 25R-8, "Sipon"*L-22, "Carbowax"* 20M, "Pluronic" P-104, "Triton"* X-100.

The following examples are given for the purpose of illustrating the present invention. All parts and percentages are by weight unless otherwise specified.

Laboratory Testing Procedure

These tests were made using a 10/1 water/polymer ratio. Ethylene/vinyl acetate copolymer pellets were agitated in ambient temperature water using mild paddle-type agitation that will assure the movement of pellets in the water. The temperature of the water was gradually increased until significant agglomeration had occurred. In the case of untreated "Elvax"* 210, the first indication of tackiness occurred at approximately 50°C. (3 to 5 pellets agglomeration around the thermometer and agitator shaft). The second indicator was larger agglomerates (6.5 to 12.7 mm) forming at a temperature of 54°C. The third and final indicator was significant agglomeration (large clump 25.4 to 50.8 mm in diameter) occurring at a temperature of 58°C. This is the temperature considered as the agglomeration temperature of "Elvax" 210. In this study, the various melt-cutter additives were dissolved in the water prior to adding the ethylene/vinyl acetate copolymer pellets.

Example 1

This example demonstrates the effect of "Carbowax" 20M, a very slightly crosslinked ethylene oxide copolymer (for further characterization see Table I), as a melt-cutter additive in laboratory tests to increase the agglomeration temperature of soft polymer grades of EVA [e.g., "Elvax" 40, (40% VA, 57 M.I.), "Elvax", 150 (33% VA, 43 M.I.) and "Elvax" 210 (28% VA, 400 M.I.)]. These tests were merely scouting tests without full attention being paid to the adequacy of agitation required to assure submersion of the pellets in the surfactant containing water. Accordingly the results are merely a rough indication of the effect of the surfactant. The tests involved the addition of 2500 ppm of "Carbowax" 20M (based on the weight of the water) agitated with a magnetic stirrer. No agglomeration occurred at 70°C. for "Elvax" 40 and 150. Pellets of "Elvax" 210 were about 60% agglomerated at 70°C. Additional tests were run using "Elvax" 40 at 1250 and 500 ppm based on the water, and these tests showed no agglomeration up to 70°C.

Example 2

This example demonstrates the effect of "Pluronic" F-98 and F-108, ethylene oxide-propylene oxide-ethylene oxide block copolymers (for further characterization see Table I), as melt-cutter additives

---

* Registered Trademarks

in laboratory tests to increase the agglomeration temperature of soft polymer grades of EVA (such as, "Elvax" 210). Following the same procedure described under Laboratory Testing Procedure, the following results were obtained:

| Melt-Cutter Additive | Melt-Cutter Additive (ppm based on $H_2O$) | Agglomeration Temperature (°C.) |
|---|---|---|
| Control | 0 | 58 |
| "Pluronic" F-98 | 0.5 | 65 |
| " | 1.0 | 71 |
| " | 2.0 | 87 |
| " | 10.0 | 94 |
| "Pluronic" F-108 | 0.5 | 65 |
| " | 1.0 | 70 |
| " | 2.0 | 88 |
| " | 10.0 | 94 |

Examples 3—6 and Comparative Examples 1—9

These examples represent the evaluation of samples from various classes of surfactants (e.g., nonionic, anionic, and cationic) in the laboratory melt-cutting study on "Elvax" 40, 150 and 210. The results are shown in Tables I and II.

TABLE I

Effect of melt-cutter additives on agglomeration
Temperature of "Elvax" 210

| Examples | Melt-Cutter Additive | Chemical Composition | Surface Tension N/Cm. 0.1%[3], 25°C. |
|---|---|---|---|
| C1 | No Additive (Control) | — | — |
| 3 | "Pluronic" F-108 | α-hydro-omega- | $41.2 \cdot 10^{-5}$ |
| 4 | "Pluronic" F-98 | hydroxy-poly(oxyethylene) | $43.0 \cdot 10^{-5}$ |
| 5 | "Pluronic" F-38 | poly(oxypropylene) poly | $52.2 \cdot 10^{-5}$ |
| 6 | "Pluronic" P-104 | (oxyethylene) block | $33.1 \cdot 10^{-5}$ |
| 7 | "Pluronic" L-121[2] | copolymer | $39.6 \cdot 10^{-5}$ |
| C2 | "Pluronic" L-43 | | $47.3 \cdot 10^{-5}$ |
| 8 | "Plurafac" A-38 | Oxyethylated Straight Chain Alcohol | $43.6 \cdot 10^{-5}$ |
| 9 | "Triton" X-100 | Octylphenoxy polyethoxy ethanol | $31.0 \cdot 10^{-5}$ |
| 10 | "Carbowax" 20M | Very slightly crosslinked ethylene oxide polymer | $52.0 @ \cdot 10^{-5}$ 50% by Wt. |
| 11 | "Pluronic" 25R-8 | α-hydro-omega-hydroxy-poly(oxypropylene) poly (oxyethylene) poly(oxy-propylene) block copolymer | $46.1 \cdot 10^{-5}$ |
| C3 | "Polyox"* WSRN-10 | More highly crosslinked ethylene oxide copolymer | |
| C4 | "Polyox" WSRN-750 | | |
| C5 | "Polyox" WSR-205 | | |
| C6 | "Polyox" WSR-1105 | | |
| 12 | "Sipon" L-22 | Ammonium Salt of Lauryl Sulfate | |
| C7 | "Atlas"* G-263 | n-cetyl-n-ethyl morpho-lineum | |

* Registered Trademarks

TABLE I (continued)

Effect of melt-cutter additives on agglomeration
temperature of "Elvax" 210

| Examples | Surfactant Type | HLB Factor | Average Mol. Wt. | 95°C Agglomeration Temperature[1] (ppm Based on Water) |
|---|---|---|---|---|
| C1 | — | — | — | Agglomerates @ 58°C, |
| 3 | Nonionic | 27.0 | 14,000 | 13 |
| 4 | Nonionic | 27.5 | 13,500 | 13 |
| 5 | Nonionic | 30.5 | 5,000 | 30 |
| 6 | Nonionic | 13.0 | 5,850 | 30 |
| 7 | Nonionic | 0.5 | 4,400 | 75°C @ 1000 ppm |
| C2 | Nonionic | 13.5 | 1,850 | 67°C. @ 1000 ppm |
| 8 | Nonionic | 20 | 1,420 | 38 |
| 9 | Nonionic | 13.5 | 628 | 295 |
| 10 | Nonionic | 20 | 14,000— 20,000 | 440 |
| 11 | Nonionic | 30.3 | 9,000 | 465 |
| C3 | Nonionic | 20 | 100,000 | 62°C. @ 1000 ppm |
| C4 | Nonionic | 20 | 300,000 | 63°C. @ 1000 ppm |
| C5 | Nonionic | 20 | 600,000 | 63°C. @ 1000 ppm |
| C6 | Nonionic | 20 | 900,000 | 63°C. @ 1000 ppm |
| 12 | Anionic | 31 | — | 875 |
| C7 | Cationic | 30 | — | 66°C @ 1000 ppm |

TABLE I (cont'd.)

Effect of melt-cutter additives on agglomeration
temperature of "Elvax" 210

Agglomeration Temperature (°C) at
Indicated Surfactant Level (ppm)[4]

| Ex. | 0 | 0.5 | 1.0 | 2.0 | 2.5 | 5 | 10 | 20 |
|-----|-----|-----|-----|-----|-----|-----|-----|-----|
| C1 | 58 | — | — | — | — | — | — | — |
| 3 | 58 | 65 | 70 | 88 | — | — | 94 | — |
| 4 | 58 | 65 | 71 | 87 | — | — | 94 | — |
| 5 | 58 | — | — | — | — | — | 62 | 68 |
| 6 | 58 | — | — | — | — | 67 | 90 | — |
| C2 | 58 | — | — | — | — | — | — | — |
| 7 | 58 | | | Insoluble in Water | | | | |
| 8 | 58 | — | 65 | — | — | — | 68 | 91 |
| 9 | 58 | — | — | — | — | — | — | — |
| 10 | 58 | — | — | — | — | — | — | 63 |
| 11 | 58 | — | — | — | — | 63 | — | — |
| 12 | 58 | — | — | — | — | 61 | — | — |
| C3 | 58 | 60 | 60 | 62 | — | — | 62 | — |
| C4 | 58 | 62 | 63 | 63 | — | — | 63 | — |
| C5 | 58 | 63 | 63 | 63 | — | — | 63 | — |
| C6 | 58 | 63 | 63 | 63 | — | — | 63 | — |
| C7 | 58 | — | — | — | — | 63 | — | — |

TABLE I (continued)

Effect of melt-cutter additives on agglomeration
temperature of "Elvax" 210

Agglomeration Temperature (°C) at
Indicated Surfactant Level (ppm)[4]

| Ex. | 30 | 40 | 50 | 100 | 200 | 300 | 500 | 1000 |
|-----|-----|-----|-----|-----|-----|-----|-----|------|
| C1 | — | — | — | — | — | — | — | — |
| 3 | — | — | — | — | — | — | — | — |
| 4 | — | — | — | — | — | — | — | — |
| 5 | >97 | — | — | — | — | — | — | — |
| 6 | — | — | — | >97 | — | — | >97 | >97 |
| C2 | — | — | — | 65 | — | — | 67 | 67 |
| 7 | Insoluble in Water | | | | | | | |
| 8 | — | — | — | — | — | — | — | — |
| 9 | — | — | — | 65 | 69 | >97 | — | — |
| 10 | — | — | 77 | 84 | — | — | >97 | — |
| 11 | — | — | 67 | 70 | 79 | — | >97 | — |
| 12 | — | — | 61 | — | — | — | 67 | >97 |
| C3 | — | — | — | — | — | — | — | 60 |
| C4 | — | — | — | — | — | — | — | 60 |
| C5 | — | — | — | — | — | — | — | 61 |
| C6 | — | — | — | — | — | — | — | 64 |
| C7 | — | — | 63 | — | — | — | 65 | 66 |

[1] except where indicated otherwise
[2] limited solubility in water
[3] wt.% concentration
[4] based on water

## TABLE II

Effect Of Melt-Cutter Additives on Agglomeration
Temperature Of "Elvax" 40 and 150

Agglomeration Temperature (°C) at indicated surfactant level (ppm)[1]

| Ex. | Additive | 0 | 0.5 | 1.0 | 2.0 | 2.5 | 5 | 10 | 20 |
|-----|----------|---|-----|-----|-----|-----|---|----|----|
| C8 | None | 45 | — | — | — | — | — | — | — |
| C9 | None | 55 | — | — | — | — | — | — | — |
| 13 | "Pluronic" F-98 | 45 | — | — | — | — | — | — | — |
| 14 | ,, | 55 | — | — | — | >85 | >85 | — | — |
| 15 | "Pluronic" F-108 | 45 | — | — | — | — | — | — | — |
| 16 | ,, | 55 | — | — | — | 90 | — | 92 | — |

[1] based on water

TABLE II (continued)

Effect Of Melt-Cutter Additives on Agglomeration

Agglomeration Temperature (°C) at indicated surfactant level (ppm)[1]

| Ex. | 30 | 40 | 50 | 100 | 200 | 300 | 500 | 1000 |
|-----|----|----|-----|-----|-----|-----|-----|------|
| C8 | — | — | — | — | — | — | — | — |
| C9 | — | — | — | — | — | — | — | — |
| 13 | — | — | >85 | — | — | — | — | — |
| 14 | — | — | — | — | — | — | — | — |
| 15 | — | — | 96 | — | — | — | — | — |
| 16 | — | — | >95 | — | — | — | — | — |

[1] based on water

### Examples 17—22

The effect of the concentration of "Pluronic" F-98 in the melt-cutter water on the adhesive properties of "Elvax" 40 to aluminum foil was studied. The results summarized in Table III show that up to and including 2,000 ppm of additive (based on the water) had little or no effect on adhesion properties.

### Example 23 and Comparative Example 10

The use of 20 ppm "Pluronic" F-98 as a melt-cutter additive was evaluated on a commercial scale in a continuous melt-cutter process for making one of the slower cutting grades of polymer, "Elvax" 210. This resulted in nearly a 50% increase in melt-cutting rates. This product, as well as a control product of "Elvax" 210, was evaluated for color, odor, gel content, and adhesion to aluminum foil, both as is and after aging. The results were summarized in Table IV. "Pluronic" F-98 melt-cutter additive had no adverse effect on any of the above properties.

ESCA (electron spectroscopy for chemical analysis) determination of the above "Elvax" 210 processed using 20 ppm "Pluronic" F-98 based on the melt-cutter water show 0.12 ppm surfactant on the polymer pellets on an 80% confidence level or 0.34 ppm based on 95% confidence level.

### Examples 24—27 and Comparative Examples 11—14

These examples show the effect of nonionic melt cutter additives on the agglomeration temperature of four soft ethylene terpolymer resins. The tests were run according to the Laboratory Testing Procedure described above. The data, summarized in Table V, show for the first three polymers that the addition of a nonionic surfactant ("Pluronic" F-98), at a concentration of 20 parts per million (ppm) based on the water, significantly increased their agglomeration temperature. For the fourth polymer, E/MA/MAME, 50 ppm "Pluronic" F-108 based on the water, significantly increased the agglomeration temperature of this terpolymer.

## TABLE III

### Effect of concentration of "Pluronic" F-98 on adhesive properties of "Elvax" 40

Peel Strength Data (N/cm)

| | | Heat Seal, 5-mil Aluminum[2] | | | |
|---|---|---|---|---|---|
| | | 120°C | | 177°C | |
| Ex. | Melt-Cutter Additive ppm[1] | Peel | Std. Deviation | Peel | Std. Deviation |
| C10 | 0 | 6.04 | 0,30 | 10.68 | 1.86 |
| 17 | 5 | 4.81 | 0.93 | 6.74 | 0.40 |
| 18 | 10 | 5.08 | 1.05 | 7,88 | 1.51 |
| 19 | 20 | 6.27 | 0.63 | 8.45 | 0.58 |
| 20 | 200 | 5.43 | 0.28 | 7.67 | 0.37 |
| 21 | 2,000 | 6.39 | 0.18 | 8.19 | 0.54 |
| 22 | 20,000 | 1.31 | 0.54 | 2.59 | 0.23 |

[1] Based on melt-cutter water.
[2] Heat Seal Conditions: Pressure = 1.38 bar; Dwell Time = 6 seconds each side.

## TABLE IV

| | Example | |
|---|---|---|
| | C-10 | 23 |
| | No Additive | 20 ppm "Pluronic" F-98 |
| Pellet Appearance | Normal | Normal |
| Peel Strength[1], N/cm | | |
| Initial | | |
| Sealing Temp. 120°C. | 0.81 | 0.81 |
| Sealing Temp. 177°C. | 6.65 | 9.28 |
| Aged 1 Week | | |
| Sealing Temp. 120°C. | 0.75 | 1.28 |
| Sealing Temp. 177°C. | 7.0 | 6.3 |

[1] Sealed to aluminum foil 6 seconds, 1.38 bar.

**0 014 467**

TABLE V

Effect of "Pluronic" F-98 & F-108 melt-cutter additives
on the agglomeration temperature of ethylene polymers

| Ex. | Polymer | Compo- sition | Melt Index | Melt- Cutter Additive (ppm based on water) | Agg. Temp. (°C) |
|---|---|---|---|---|---|
| C11 | E/VA/CO[3] | 61/29/10 | 35 | 0 | 52 |
| 24 | E/VA/CO[3] | 61/29/10 | 35 | 20 (F-98) | 93 |
| C12 | E/VA/MAA[4] | 74/25/1 | 500 | 0 | 62 |
| 25 | E/VA/MAA[4] | 74/25/1 | 500 | 20 (F-98) | 92 |
| C13 | E/MA/CO[1] | 64.2/22.7/13.1 | 81 | 0 | 60 |
| 26 | E/MA/CO[1] | 64.2/22.7/13.1 | 81 | 20 (F-98) | 95 |
| C14 | E/MA/MAME[2] | 43/53/4 | 9 | 0 | 61 |
| 27 | E/MA/MAME[2] | 43/53/4 | 9 | 50(F-108) | 97 |

[1] Ethylene/methyl acrylate/carbon monoxide copolymer.
[2] Ethylene/methyl acrylate/monoethylester of maleic acid copolymer.
[3] Ethylene/vinyl acetate/carbon monoxide copolymer.
[4] Ethylene/vinyl acetate/methacrylic acid copolymer.

Agglomeration temperatures of various Elvax® grades are indicated on Table VI below.

TABLE VI

Agglomeration Temperature of "Elvax" Grades

| "Elvax" | Melt Index | Vinyl Acetate % | Agglomeration Temperature (°C) |
|---|---|---|---|
| 40 | 57 | 40 | 45 |
| 150 | 43 | 33 | 55 |
| 210 | 402 | 28 | 58 |
| 250 | 25 | 28 | 67 |
| 260 | 6 | 28 | 64 |
| 265 | 3 | 28 | 76 |
| 310 | 402 | 25 | 59 |
| 350 | 19.1 | 25 | 65 |
| 360 | 2 | 25 | 72 |
| 410 | 502 | 18 | 63 |
| 420 | 150 | 18 | 72 |
| 460 | 2.5 | 18 | 81 |

12

## Claims

1. A process for melt cutting ethylene polymers, which process comprises extruding molten thermoplastic polymer through one or more orifices into water and cutting the extruded strand as it undergoes solidification, characterised in adding to the water from about 1 to about 1000 ppm by weight of at least one surfactant selected from the group consisting of non-ionic and anionic surfactants that will increase by at least 10°C the agglomeration temperature of an ethylene polymer that has an agglomeration temperature of from about 50°C. to about 60°C., said surfactant having a hydrophilic/lipophilic balance (HLB) range of from about 10 to about 45.

2. The process of Claim 1 wherein said surfactant is anionic surfactant.

3. The process of Claim 1 wherein said surfactant is non-ionic surfactant.

4. The process of Claim 3 wherein said non-ionic surfactant is selected from the group consisting of ethylene oxide and propylene oxide homo- and copolymers.

5. The process of Claim 4 wherein the HLB range of said non-ionic surfactant is from about 20 to about 35.

6. The process of Claim 5 wherein said non-ionic surfactant is selected from the group consisting of ethylene oxide and propylene oxide copolymers, oxyethylated straight chain alcohols and octyl phenoxy polyethoxy ethanol.

7. The process of Claim 6 wherein said non-ionic surfactant is selected from the group consisting of ethylene oxide and propylene oxide copolymers.

8. The process of Claim 7 wherein said non-ionic surfactant is selected from the group consisting of $\alpha$-hydro-omega-hydroxy-poly(oxyethylene) poly(oxypropylene) poly(oxyethylene) block copolymers.

9. The process of Claim 7 wherein said non-ionic surfactant is selected from the group consisting of $\alpha$-hydro-omega-hydroxy-poly(oxyethylene) poly(oxypropylene) poly(oxyethylene) block copolymers having an average molecular weight of at least about 5000 and oxythylated straight chain alcohols having an average molecular weight of at least about 1420.

10. The process of Claims 3, 4, 6, 8 and 9 wherein said surfactant is present in an amount of from about 1 to about 100 ppm based upon the weight of the water.

## Revendications

1. Procédé pour le coupage à l'état fondu de polymères d'éthylène, procédé qui consiste à extruder dans de l'eau le polymère thermoplastique fondu à travers un ou plusieurs orifices et à couper le cordon extrudé pendant qu'il se solidifie, caractérisé en ce que l'on ajoute à l'eau environ 1 à environ 1000 ppm en poids d'au moins un agent tensio-actif choisi dans le groupe qui comprend les agents tensio-actifs non ioniques et anioniques propres à élever d'au moins 10°C la température d'agglomération d'un polymère d'éthylène qui a une température d'agglomération d'environ 50 à environ 60°C, cet agent tensio-actif ayant une gamme d'équilibre hydrophile/lipophile (EHL) d'environ 10 à environ 45.

2. Procédé selon la revendication 1, dans lequel l'agent tensio-actif est un agent tensio-actif anionique.

3. Procédé selon la revendication 1, dans lequel l'agent tensio-actif est un agent tensio-actif non ionique.

4. Procédé selon la revendication 3, dans lequel l'agent tensio-actif non ionique est choisi dans le groupe comprenant les homopolymères et copolymères d'oxyde d'éthylène et d'oxyde de propylène.

5. Procédé selon la revendication 4, dans lequel la gamme d'équilibre hydrophile/lipophile de l'agent tensio-actif non ionique est d'environ 20 à environ 35.

6. Procédé selon la revendication 5, dans lequel l'agent tensio-actif non ionique est choisi dans le groupe comprenant les copolymères d'oxyde d'éthylène et d'oxyde de propylène, les alcools à chaîne droite oxyéthylés et l'octyl-phénoxy-polyéthoxyéthanol.

7. Procédé selon la revendication 6, dans lequel l'agent tensio-actif non ionique est choisi dans le groupe comprenant les copolymères d'oxyde d'éthylène et d'oxyde de propylène.

8. Procédé selon la revendication 7, dans lequel l'agent tensio-actif non ionique est choisi dans le groupe comprenant les copolymères séquencés $\alpha$-hydro-$\omega$-hydroxy-poly-(oxyéthylène)-poly-(oxypropylène)-poly-(oxyéthylène).

9. Procédé selon la revendication 8, dans lequel l'agent tensio-actif non ionique est choisi dans le groupe comprenant les copolymères séquencés $\alpha$-hydro-$\omega$-hydroxy-poly-(oxyéthylène)-poly-(oxypropylène)-poly-(oxyéthylène) ayant un poids moléculaire moyen d'au moins environ 5000 et les alcools à chaîne droite oxyéthylés ayant un poids moléculaire moyen d'au moins environ 1420.

10. Procédé selon les revendications 3, 4, 6, 8 et 9, dans lequel l'agent tensio-actif est présent à raison d'environ 1 à environ 100 ppm relativement au poids de l'eau.

# 0 014 467

Patentansprüche

1. Verfahren zum Schmelzschneiden von Ethylenpolymeren durch Strangpressen von geschmolzenem thermoplastischem Polymeren durch eine oder mehrere Austrittsöffnungen in Wasser und Schneiden des stranggepreßten Strangs während er fest wird, dadurch gekennzeichnet, daß man zu dem Wasser etwa 1 bis etwa 1000 ppm, bezogen auf das Gewicht, mindestens eines oberflächenaktiven Mittels fügt, ausgewählt aus der Gruppe von nicht-ionischen und anionischen oberflächenaktiven Mitteln, die die Agglomerationstemperatur eines Ethylenpolymeren, das eine Agglomerationstemperatur von etwa 50°C bis etwa 60°C aufweist, um mindestens 10°C erhöht, wobei das oberflächenaktive Mittel ein Hydrophil/Lipophil-Gleichgewicht (HLB) im Bereich von etwa 10 bis etwa 45 aufweist.

2. Verfahren nach Anspruch 1, bei dem das oberflächenaktive Mittel ein anionisches oberflächenaktives Mittel ist.

3. Verfahren nach Anspruch 1, bei dem das oberflächenaktive Mittel ein nicht-ionisches oberflächenaktives Mittel ist.

4. Verfahren nach Anspruch 3, bei dem das nicht-ionische oberflächenaktive Mittel ausgewählt ist aus der Gruppe von Ethylenoxid- und Propylenoxid-homo- und -copolymeren.

5. Verfahren nach Anspruch 4, bei dem der HLB-Bereich des nicht-ionischen oberflächenaktiven Mittels etwa 20 bis etwa 35 beträgt.

6. Verfahren nach Anspruch 5, bei dem das nicht-ionische oberflächenaktive Mittel ausgewählt ist aus der Gruppe von Ethylenoxid- und Propylenoxid-copolymeren, oxyethylierten geradkettigen Alkoholen und Octylphenoxypolyethoxyethanol.

7. Verfahren nach Anspruch 6, bei dem das nicht-ionische oberflächenaktive Mittel asugewählt ist aus der Gruppe von Ethylenoxid- und Propylenoxid-copolymeren.

8. Verfahren nach Anspruch 7, bei dem das nicht-ionische oberflächenaktive Mittel ausgewählt ist aus der Gruppe von $\alpha$-Hydro-omega-hydroxy-poly(oxyethylen) poly(oxypropylen) poly(oxyethylen)-Blockcopolymeren.

9. Verfahren nach Anspruch 7, bei dem das nicht-ionische oberflächenaktive Mittel ausgewählt ist aus der Gruppe von $\alpha$-Hydro-omega-hydroxy-poly(oxyethylen) poly(oxypropylen) poly(oxyethylen)-Blockcopolymeren mit einem mittleren Molekulargewicht von mindestens etwa 5000 und oxyethylierten geradkettigen Alkoholen mit einem mittleren Molekulargewicht von mindestens etwa 1420.

10. Verfahren nach Anspruch 3, 4, 6, 8 und 9, bei dem das oberflächenaktive Mittel in einer Menge von etwa 1 bis etwa 100 ppm, basierend auf dem Gewicht des Wassers, vorhanden ist.